# EUROPEAN PATENT SPECIFICATION

(11) **EP 2 346 288 B1**
(45) Date of publication and mention of the grant of the patent: **01.06.2016**
(21) Application number: 10150995.8
(22) Date of filing: 18.01.2010
(51) Int. Cl.: H04W 52/02, H04L 29/06

(54) **Method for limiting the energy consumption of a mobile device**
Verfahren zur Einschränkung des Energieverbrauchs einer mobilen Vorrichtung
Procédé de limitation de la consommation énergétique d'un dispositif mobile

(43) Date of publication of application: 20.07.2011
(73) Proprietor: ALCATEL LUCENT, 92100 Boulogne-Billancourt (FR)
(72) Inventor: Grand, Jean-Yves, 91620 Nozay (FR)
(74) Representative: Berthier, Karine

(56) References cited:
- EP-A2- 1 613 107
- ROSU M C ET AL: "PAWP: A Power Aware Web Proxy for Wireless LAN Clients" MOBILE COMPUTING SYSTEMS AND APPLICATIONS, 2004. WMCSA 2004. SIXTH IEE E WORKSHOP ON WINDERMERE, CUMBRIA, UK 02-03 DEC. 2004, PISCATAWAY, NJ, USA,IEEE LNKD- DOI:10.1109/MCSA.2004.18, 2 December 2004 (2004-12-02), pages 206-215, XP010757460 ISBN: 978-0-7695-2258-6
- WILLIAMS M G ET AL: "Power Save Topics for Mobile Battery Powered Wireless Devices" IEEE 802.21 MEDIA INDEPENT HANDOVER, DENVER, [Online] 15 July 2008 (2008-07-15) , pages 1-25, XP002545637 Retrieved from the Internet: URL:https://mentor.ieee.org/802.21/dcn/08/ 21-08-0229-00-mrpm-mtpm-power-save-topics. ppt> [retrieved on 2009-09-14]

## Description

The invention relates to a method for limiting the energy consumption of a mobile device.

Energy consumption is a main issue for mobile devices since their autonomy directly depends thereon. In order to limit their energy consumption, it is known to place mobile devices on a specific mode, generally called as "sleep" or "idle" mode, whereby said mobile devices do not perform any operation and remains nearly switched off.

It is also known to limit their energy consumption by inhibiting some operations through software which inhibits some activity of said mobile devices in order to reduce its work load.

Switching a device in a sleep or idle mode inhibits nearly all the operations of a mobile device.

A prior art example can be found in "PAWP: A Power Aware Web Proxy for Wireless LAN Clients", Marcel C. Rosu et al.

Thus said method appears too inconvenient for users who might wish to maintain a minimal use of their mobile terminal in order to receive, for instance, emails having a high priority or relating to specific fields.

Similarly, having specific software for limiting the energy consumption appears to be a nuisance for its user since said software could interfere with the operating system of the mobile device and/or other hardware or software of the mobile device. Therefore users tend to be generally reluctant to implement new software which might decrease the performance of their mobile device.

The present invention is defined by the accompanying independent claims. Preferred embodiments are defined by the dependent claims.

The object of the invention is to provide a method for limiting the energy consumption of a mobile device while providing the opportunity to perform specific communications as, for instance, those having a top priority.

The invention results from the intuition that a significant part of a mobile device communications relate to unknown and/or unnecessary matters for its user, as specific signals required to implement the Dynamic Host Configuration Protocol or the Domain Name System, so that some communications of a mobile device could be inhibited while creating no nuisance.

Therefore the present invention relates to method for limiting the energy consumption of a mobile device communicating with a telecommunication network, wherein it comprises the following steps:
- the step for the mobile device to switch on a specific state of energy consumption so that specific communications to be sent to the network are inhibited by the mobile device in order to avoid the transmission of said specific communications,
- the step for the mobile device to communicate to the network that said mobile device has switched on said specific state of energy consumption, and
- the step for the network to register that said mobile device has switched on said specific state of energy consumption so that specific communications to be sent to the mobile device are inhibited by the network.

When implementing the invention, a mobile device operates as usually excepted on that some specific communications are inhibited, which can significantly reduce the energy consumption of a mobile device while creating no nuisance to its user since many communications are unknown.

Moreover the invention requires to the network to implement a complementary inhibition so that the mobile device does not have to deal with unnecessary communications so that, again, the energy consumption of the mobile device is limited.

In one embodiment, the invention further comprises the step of switching the specific state of energy within the mobile device through a firewall which presents different security states, whereby a higher number of operations are inhibited for a higher level of security, a state inhibiting said specific communications.

In another embodiment, the invention further comprises the step of switching the state inhibiting said specific communications automatically.

In one embodiment, the invention further comprises the step of switching automatically the state inhibiting said specific communications when one of the following situations is found: a limited charge of the mobile device battery, a wireless state.

In one embodiment, the invention further comprises the step of switching a specific state of energy within the network through a firewall which presents different security states, whereby a higher number of operations are inhibited for a higher level of security, a state inhibiting said specific communications.

In one embodiment, a common network firewall is used for a plurality of mobile devices.

In one embodiment, the network implements a buffer so that inhibited communications are stored in said buffer while the mobile device is switched on the specific state of energy consumption.

In one embodiment, the invention further comprises the step of buffering the communications until a threshold wherefrom the network requires to the mobile device of switching out from the specific state in order to empty the buffer messages towards the mobile device.

The invention also relates to a mobile device aimed to communicate with a telecommunication network, wherein it comprises:
- means for switching on a specific state of energy consumption so that specific communications to be sent to the network are inhibited in order to avoid the transmission of said specific communications,
- Means for communicating to the network that said mobile device has switched on said specific state of energy consumption,
so that the terminal contributes to implement a method according to any of the previous embodiments.

The invention also relates to a telecommunication network aimed to communicate with mobile devices, wherein it comprises:
-means for switching on a specific state of energy consumption so that specific communications to be sent to the mobile devices are inhibited in order to avoid the transmission of said specific communications and contributing to implement a method according to any of the previous embodiments.

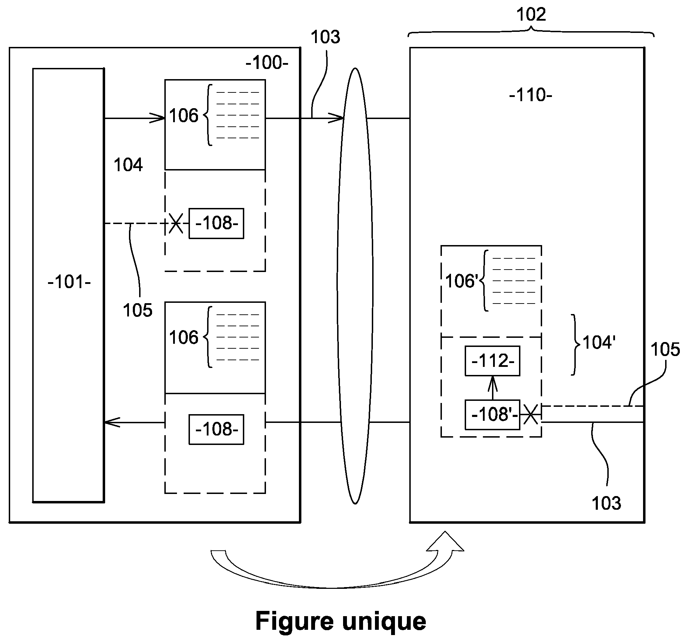

Reference will now be made in detail to the present preferred embodiment of the invention, an example of which is illustrated in the accompanying figure wherein a schematic view of a mobile device implementing a mobile firewall according to the invention is represented.

In reference to the accompanying figure, a mobile device 100 is connected to a telecommunication network 102 in order to send or receive messages on the basis of an application 101 - for instance an email application as Outlook™.

For that purpose, a communication protocol is implemented between the mobile device 100 and the network 102 as a cellular protocol - as W-CDMA for Wideband Code Division Multiple Access, GPRS for General Packet Radio Service, UMTS for Universal Mobile Telecommunications System or LTE for Long Term Evolution - or a more general wireless communication protocols - as WI-FI^{™}, WIMAX for Worldwide Interoperability for Macrowave Access or Wideband Code Division Multiple Access.

Indeed the mobile device 100 could be a cellular mobile phone, a laptop, a personal digital assistant, a laptop or more generally any mobile device which has communications 103 with network 102.

According to the invention, the mobile device can be switched on a specific state of energy consumption so that specific communications 105 to be sent to the network 102 are inhibited by the mobile device 100 in order to avoid the transmission - and the energy cost - of said specific communications 105.

In this described embodiment, said inhibition is performed through a firewall 104 of the mobile device 100, said firewall 104 being software which controls the operations of the mobile terminal 100 in order to prevent, detect and/or erase computer virus.

For that purpose, it is known that firewall presents different security states 106 whereby, for a higher level of security, a higher number of operations are inhibited.

The invention takes advantage of such approach to propose a new state 108 aimed to inhibit specific communications when said state 108 is required, either manually by the mobile device user or automatically.

For instance said state 108 could be called "Idle wireless state" since, generally speaking, the invention appears to be highly effective when wireless communications are dealt with the mobile device. Nevertheless, said state could also be implemented on a computer, for instance a personal computer (PC) or a laptop, when said computer uses its battery and/or when specific treatments are done to decrease the energy consumption relating, for instance, to an intensity of the screen, a delay for screen sleeping, a disk sleeping.

According to this firewall 104 embodiment, said firewall 104 implements its usual states 106 of security with a complementary state 108 aimed to avoid unnecessary transmission towards the network in order to limit the terminal consumption.

Said complementary state 108 can be embodied within the mobile device 100 during its manufacturing as well as downloaded/updated from the network 102 after said manufacturing.

Thereafter, the initialization of the firewall can be based on one or several profile proposals from, for instance, the operator of the network 102 so that the same profile could be applied in the network 102 side as described thereafter. Similarly, the operator might present proposals to duplicate and/or to update the firewall 104.

In this embodiment of the invention, the mobile device 104 communicates to the network 102 that it has switched on said specific state 108 of energy consumption so that the network 102 can also inhibit the transmission of specific communications to the mobile device 102.

In other words a firewall 104' is also implemented on the network side
- for instance within a server as a gateway 110 or a base station - so that a "battery", or "wireless", state can be implemented to analyze communications to be transmitted to the mobile device 100 and, if necessary, to inhibit said transmissions.

Said implementation does not prevent the mobile device 100 of having an incoming firewall disregarding incoming communications for energy/security reasons.

The present invention can be implemented according to different embodiments. For instance, according to different embodiments, a common network firewall 104' is used for a plurality of mobile devices - typically when the gateway 110 deals with a large number of mobile devices as for a cellular gateway - whereas, in other embodiments, individual network firewalls 104' are developed for each mobile device 100 - typically when the gateway 110 deals with a limited number of mobile devices as for Wifi gateways.

Also, different embodiments have to be considered according to different protocols which might be used for the communications between the mobile device 100 and the network 102. At this level it could be underlined that the invention could be implemented on a router 110 dealing with a plurality of mobile devices using different protocols.

Finally, the invention could be implemented through different sequences of operations. For instance, a buffer 112 could be assigned to each mobile device 100 entering into a sleep mode so that the inhibited packets are either rejected or stored in the buffer up to a threshold which would require the mobile going out of the battery state in order to empty the buffer towards the mobile and/or to erase older data with new stored data.

For instance, messages within the Session Initiation Protocol (SIP) can force to end an idle mode of a terminal whereby packets relating to some communication levels and/or parameters - as packets relating to Transfer Control Protocol, User Datagram Protocol - are stored while other packets - as packets relating to Internet Control Message Protocol, Dynamic Host Configuration Protocol, Domain Name System - are disregarded.

## Claims

1. Method for limiting the energy consumption of a mobile device (100) communicating (103) with a telecommunication network (102), wherein it comprises the following steps:
- the step for the mobile device (100) to switch on a specific state (108) of energy consumption so that specific communications (105) to be sent to the network (102) are inhibited by the mobile device (100) in order to avoid the transmission of said specific communications (105) while providing the opportunity to perform communications having a top priority,
- the step for the mobile device (100) to communicate to the network (102) that said mobile device (100) has switched on said specific state (108) of energy consumption.

2. Method according to claim 1 wherein it further comprises the step of switching the specific state (108) of energy within the mobile device (100) through a firewall (104) which presents different security states (106), whereby a higher number of operations are inhibited for a higher level of security, a state (108) inhibiting said specific communications (105).

3. Method according to claim 2 wherein it further comprises the step of switching the state (108) inhibiting said specific communications (105) automatically.

4. Method according to claim 3 wherein it further comprises the step of switching automatically the state (108) inhibiting said specific communications (105) when one of the following situations is found: a limited charge of the mobile device battery, a wireless state.

5. Method according to any of the previous claims wherein it further comprises the step of switching a specific state (108') of energy within the network through a firewall (104') which presents different security states (106'), whereby a higher number of operations are inhibited for a higher level of security, a state (108') inhibiting said specific communications (105').

6. Method according to claim 5 wherein a common network firewall (104') is used for a plurality of mobile devices.

7. Method according to claim 5 or 6 wherein the network (102) implements a buffer (112) so that inhibited communications are stored in said buffer (112) while the mobile device (100) is switched on the specific state (108) of energy consumption.

8. Method according to claim 7 wherein it further comprises the step of buffering the communications until a threshold wherefrom the network (102) requires to the mobile device (100) of switching out from the specific state (108) in order to empty the buffer messages towards the mobile device (102).

9. Mobile device (100) configured to communicate (103) with a telecommunication network (102), the mobile device comprising:
- means (104) for switching on a specific state (108) of energy consumption so that specific communications (105) to be sent to the network (102) are inhibited in order to avoid the transmission of said specific communications (105) while providing the opportunity to perform communications having a top priority,
- means for communicating to the network (102) that said mobile device (100) has switched on said specific state (108) of energy consumption.

## Patentansprüche

1. Verfahren zur Begrenzung des Energieverbrauchs eines Mobilgeräts (100), das mit einem Telekommunikationsnetz (102) kommuniziert (103), die folgenden Schritte umfassend:
- den Schritt des Umschaltens auf einen spezifischen Status (108) hinsichtlich des Energieverbrauchs durch ein Mobilgerät (100), damit spezifische, an das Netzwerk (102) zu sendende Kommunikationen (105) vom Mobilgerät (100) unterbunden werden, um die Übertragung besagter spezifischer Kommunikationen (105) zu verhindern, während die Möglichkeit geboten wird, Kommunikation oberster Priorität zu ermöglichen.
- den vom Mobilgerät (100) auszuführenden Schritt des Kommunizierens an das Netzwerk (102), dass besagtes Mobilgerät (100) auf besagten spezifischen Status (108) hinsichtlich des Energieverbrauchs umgeschaltet hat.

2. Verfahren nach Anspruch 1, wobei dieses weiterhin den Schritt des Umschaltens auf den spezifischen Status (108) des Energieverbrauchs in dem Mobilgerät (100) durch eine Firewall (104) hindurch umfasst, welche verschiedene Sicherheitsstatus (106) vorweist, wobei für ein höheres Maß an Sicherheit eine höhere Zahl von Operationen unterbunden wird, wobei ein spezifischer Status (108) besagte spezifische Kommunikationen (105) unterbindet.

3. Verfahren nach Anspruch 2, wobei dieses weiterhin den Schritt des Umschaltens des Status (108) umfasst, automatisch besagte spezifische Kommunikationen (105) unterbindend.

4. Verfahren nach Anspruch 3, weiterhin den Schritt des automatischen Umschaltens des Status (108) umfassend, besagte spezifische Kommunikationen (105) unterbindend, wenn eine der folgenden Situationen festgestellt wird: ein niedriger Ladezustand der Batterie oder ein Zustand ohne Netzzugang.

5. Verfahren nach einem jeglichen der vorgenannten Ansprüche, wobei dieses weiterhin den Schritt des Umschaltens auf einen spezifischen Status (108') des Energieverbrauchs in dem Netzwerk durch eine Firewall (104') hindurch umfasst, welche verschiedene Sicherheitsstatus (106') vorweist, wobei für ein höheres Maß an Sicherheit eine höhere Zahl von Operationen unterbunden wird, wobei ein spezifischer Status (108') besagte spezifische Kommunikationen (105') unterbindet.

6. Verfahren nach Anspruch 5, wobei eine gemeinsame Netzwerk-Firewall (104') für eine Vielzahl von Mobilgeräten verwendet wird.

7. Verfahren nach den Ansprüchen 5 oder 6, wobei das Netzwerk (102) einen Puffer (112) implementiert, so dass unterbundene Kommunikationen in besagtem Puffer (112) gespeichert werden, während das Mobilgerät (100) in den spezifischen Status (108) des Energieverbrauchs umgeschaltet ist.

8. Verfahren nach Anspruch 7, wobei dieses weiterhin den Schritt des Pufferns der Kommunikationen bis zu einem Grenzwert umfasst, ab welchem das Netzwerk (102) das Mobilgerät zum Umschalten aus dem spezifischen Status (108) auffordert, um die Puffernachrichten an das Mobilgerät (102) zu leiten.

9. Ein Mobilgerät (100), konfiguriert für das Kommunizieren (103) mit einem Telekommunikationsnetz (102), wobei das Mobilgerät Folgendes umfasst:
- Mittel (104) für das Umschalten auf einen spezifischen Status (108) hinsichtlich des Energieverbrauchs, damit spezifische, an das Netzwerk (102) zu sendende Kommunikationen (105) unterbunden werden, um die Übertragung besagter spezifischer Kommunikationen (105) zu verhindern, während die Möglichkeit geboten wird, Kommunikation oberster Priorität zu ermöglichen,
- Mittel für das Kommunizieren an das Netzwerk (102), dass besagtes Mobilgerät (100) auf besagten spezifischen Status (108) hinsichtlich des Energieverbrauchs umgeschaltet hat.

## Revendications

1. Procédé pour limiter la consommation énergétique d'un dispositif mobile (100) communiquant (103) avec un réseau de télécommunication (102), comprenant les étapes suivantes :
- l'étape où le dispositif mobile (100) commute dans un état spécifique (108) de consommation énergétique de sorte que des communications spécifiques (105) devant être envoyées au réseau (102) soient bloquées par le dispositif mobile (100) afin d'éviter la transmission desdites communications spécifiques (105) tout en permettant de réaliser des communications ayant une priorité supérieure,
- l'étape où le dispositif mobile (100) signale au réseau (102) que ledit dispositif mobile (100) a commuté dans ledit état spécifique (108) de consommation énergétique.

2. Procédé selon la revendication 1 comprenant en outre l'étape de commutation de l'état spécifique (108) de l'énergie à l'intérieur du dispositif mobile (100) par l'intermédiaire d'un pare-feu (104) qui présente différents états de sécurité (106), un nombre plus important d'opérations étant empêché pour un niveau supérieur de sécurité, un état (108) bloquant lesdites communications spécifiques (105).

3. Procédé selon la revendication 2 comprenant en outre l'étape de commutation de l'état (108) bloquant lesdites communications spécifiques (105) automatiquement.

4. Procédé selon la revendication 3 comprenant en outre l'étape de commutation automatique de l'état (108) bloquant lesdites communications spécifiques (105) lorsqu'une des situations suivantes se présente : une charge limitée de la batterie de dispositif mobile, un état sans fil.

5. Procédé selon l'une quelconque des revendications précédentes comprenant en outre l'étape de commutation d'un état spécifique (108') de l'énergie à l'intérieur du réseau par l'intermédiaire d'un pare-feu (104') qui présente différents états de sécurité (106'), un nombre plus important d'opérations étant empêché pour un niveau supérieur de sécurité, un état (108') bloquant lesdites communications spécifiques (105').

6. Procédé selon la revendication 5 dans lequel un pare-feu de réseau commun (104') est utilisé pour une pluralité de dispositifs mobiles.

7. Procédé selon la revendication 5 ou 6 dans lequel le réseau (102) met en oeuvre une mémoire tampon (112) de sorte que des communications bloquées soient stockées dans ladite mémoire tampon (112) alors que le dispositif mobile (100) commute dans l'état spécifique (108) de la consommation énergétique.

8. Procédé selon la revendication 7 comprenant en outre l'étape de mise en mémoire tampon des communications jusqu'à atteindre un seuil à partir duquel le réseau (102) commande au dispositif mobile (100) de quitter l'état spécifique (108) afin de vider les messages en mémoire tampon en direction du dispositif mobile (102).

9. Dispositif mobile (100) configuré pour communiquer (103) avec un réseau de télécommunication (102), le dispositif mobile comprenant :
- des moyens (104) pour commuter dans un état spécifique (108) de consommation énergétique de sorte que des communications spécifiques (105) devant être envoyées au réseau (102) soient bloquées afin d'éviter la transmission desdites communications spécifiques (105) tout en permettant de réaliser des communications ayant une priorité supérieure,
des moyens pour signaler au réseau (102) que ledit dispositif mobile (100) a commuté dans ledit état spécifique (108) de consommation énergétique.
